# EUROPEAN PATENT SPECIFICATION

(11) **EP 4 620 756 B1**
(45) Date of publication and mention of the grant of the patent: **12.08.2026**
(21) Application number: 24164049.9
(22) Date of filing: 18.03.2024
(51) Int. Cl.: B60T 17/22

(54) **A COMPUTER SYSTEM AND A COMPUTER-IMPLEMENTED METHOD FOR DETERMINING THAT A VEHICLE BRAKE IS DRAGGING**
COMPUTERSYSTEM UND COMPUTERIMPLEMENTIERTES VERFAHREN ZUR BESTIMMUNG DES ZIEHENS EINER FAHRZEUGBREMSE
SYSTÈME INFORMATIQUE ET PROCÉDÉ MIS EN UVRE PAR ORDINATEUR POUR DÉTERMINER QU'UN FREIN DE VÉHICULE EST TRAÎNANT

(43) Date of publication of application: 24.09.2025
(73) Proprietor: VOLVO TRUCK CORPORATION, 405 08 Göteborg (SE)
(72) Inventor: ANDERSSON, Tobias, 423 38 Torslanda (SE); LÖFGREN, Jonas, 416 78 Göteborg (SE); AUGUSTSSON, Kent, 517 37 Bollebygd (SE)
(74) Representative: Zacco Sweden AB

(56) References cited:
- GB-A- 2 557 195
- SE-C2- 522 239
- US-A1- 2020 040 956
- US-A1- 2022 410 865
- US-A1- 2023 109 721
- US-A1- 2023 303 051
- US-A1- 2023 373 455
- US-B2- 10 272 277
- US-B2- 11 047 439
- US-B2- 7 712 588

## Description

### TECHNICAL FIELD

The disclosure relates generally to a computer system and a computer-implemented method. In particular aspects, the disclosure relates to a computer system and a computer-implemented method for determining that a vehicle brake is dragging. The disclosure can be applied to heavy-duty vehicles, such as trucks, buses, and construction equipment, among other vehicle types. Although the disclosure may be described with respect to a particular vehicle, the disclosure is not restricted to any particular vehicle. Examples thereof are disclosed in US2023/373455 A1, US2020/040956 A1 and US10272277 B2.

### BACKGROUND

Dragging brakes can cause overheated brake discs/drums, bearings and other potential thermal events in vehicles. If there is a driver in a vehicle, the driver may be able to see smoke, feel vibrations, etc., but for driverless vehicles there should be some system for detecting if a brake is dragging so that a warning may be issued before the brake disc/drum or bearings overheat. Such systems may, of course, also be relevant for driver-operated vehicles.

### SUMMARY

According to a first aspect of the disclosure, there is provided a computer system comprising processing circuitry configured to:
- acquire, from a first input device comprising or being in the form of a temperature sensor, first input data representing brake temperature values that have been measured for a brake of a vehicle by the temperature sensor,
- acquire, from a different second input device, second input data representing parameter values in the form of or translatable into estimated brake temperature values for said brake,
- compare said first input data and said second input data, and
- determine that the brake is dragging based on the comparison of said first input data and said second input data. The first aspect of the disclosure may seek to provide a more accurate determination of a brake dragging event. A technical benefit may include that by comparing measured temperature (obtainable from the first input data) with an estimated temperature (obtainable from the second input data), a more accurate and reliable result is achieved than if one would only rely on a single source for making the brake dragging determination. The estimation can be used as a manner of checking if measured temperature values are really due to brake dragging or if there may be some other reasons behind the obtained measurement results. For instance, although temperature sensors may advantageously be used for measuring the temperature at the brakes, and may therefore indeed correctly detect high temperatures due to dragging, a drawback is that the temperature sensors cannot differentiate a rise in temperature due to purposeful braking or a rise in temperature due to residual torque creating the heat in the brake disk or brake drum. By additionally providing separate input data in which a brake temperature is estimated, a distinction may be made between such different heat generating instances.

As will be discussed in the following, examples of second input data may include temperature estimations using a temperature estimator from an electronic brake system of the vehicle, or temperature estimations based on pressure sensor measurements. For example, the second input data, from said different second input device, may represent parameter values in the form of estimate brake temperature values obtained from a temperature estimator, or may represent parameter values (such as pressure values, brake force values, wheel speed values, brake torque values, etc.) translatable into estimated brake temperature values for the brake. For instance, if there is a rise in temperature despite there being no brake pressure applied, then it may be determined that the brake is dragging. Different examples will now be discussed in more detail.

Optionally in some examples, including in at least one preferred example, the processing circuitry may further be configured to:
- compare said first input data and said second input data by mapping, for multiple brake events, a temperature point for each brake event, each temperature point indicating a measured brake temperature value relative to an estimated brake temperature value, and
- identify a cluster centroid of the mapped temperature points within a predefined area of the map. A technical benefit may include that by mapping the measured temperature versus estimated temperature, a tendency may be discernable in the form of a cluster. Different conclusions may be drawn depending on in which part of the map the cluster centroid is located. For example, if the measured temperature is high, but the estimated temperature is low, then the processing circuitry may determine that there is a problem with residual brake torque, i.e. dragging brake. On the other hand if the measured temperature is low but the estimated temperature is high, then the processing circuitry may determine that brake pressure is applied without energy going into the brakes, which may be indicative of a problem with the brakes or the electronic brake system. If, on the other hand, the estimated temperature and the measured temperature are within a certain tolerance, the processing circuitry may conclude that the brake is functioning. A more detailed discussion related to such mapping will be discussed in relation to some examples below.

Optionally in some examples, including in at least one preferred example, in said predefined area of the map, any temperature point represents a measured brake temperature value being higher than an estimated brake temperature value, wherein the processing circuitry may be further configured to:
- determine that the brake is dragging based on the identification of the cluster centroid being present within said predefined area of the map. A technical benefit may include that by determining that the measured temperature is higher than what it is expected to be, i.e. higher than the estimated brake temperature, allows for a reliable confirmation of brake dragging. For example, if a temperature estimator or a pressure sensor is used for estimating the temperature, such as based on purposeful application of brakes, and there is a considerable discrepancy in relation to the measured temperature, which is higher, then the processing circuitry can draw the conclusion that the brake is dragging.

The determination by the processing circuitry may, for example be time-based, such as day by day or hour by hour, etc. However, instead of such daily or hourly based determination, the determination by the processing circuitry may be count-based, e.g. after a certain number of brake events, the processing circuitry may check if the brake is dragging.

Optionally in some examples, including in at least one preferred example, in said predefined area of the map, any temperature point represents a measured brake temperature value being lower than an estimated brake temperature value, wherein the processing circuitry may further be configured to:
- determine that the brake, or an electronic brake system controlling the brake, is malfunctioning based on the identification of the cluster centroid being present within said predefined area of the map. A technical benefit may include that by determining that the measured temperature is lower than what it is expected to be, i.e. lower than the estimated brake temperature, allows for a reliable dismissal of the reason being brake dragging, and instead allows for determination that the brake or the electronic brake system is malfunctioning. For example, if a temperature estimator or a pressure sensor is used for estimating the temperature, such as based on purposeful application of brakes, and there is a considerable discrepancy in relation to the measured temperature, which is higher, then the processing circuitry can draw the conclusion that despite the brakes being applied the temperature is not what would have been expected, which may therefore be indicative of said malfunctioning.

Optionally in some examples, including in at least one preferred example, the processing circuitry may further be configured to, over a time period, continuously acquire said first input data and said second input data, irrespective of presence or absence of any brake events, wherein the processing circuitry may further be configured to compare said first input data and said second input data by:
- mapping the measured brake temperature values as a first function of time,
- mapping the estimated brake temperature values as a second function of time, and
- continuously registering, during said time period, a difference between the values of the first function and the second function. A technical benefit may include that the determination with respect to the brake dragging or not may be performed continuously. By recording a temperature delta between the measured temperature and the estimated temperature, the processing circuitry may determine that if the estimated temperature (or its derivate) is low but the temperature delta is increasing over a certain tolerance, then that may be indicative of a dragging brake. Suitably, in such case, a warning may be issued to the driver or to a fleet owner (for example if the vehicle is a self-driving autonomous vehicle) as there may be a risk of excessive wear in the brake pads.

Optionally in some examples, including in at least one preferred example, the processing circuitry may be configured to:
- determine that, for any point in time during said time period, a value of the first function is larger than the value of the second function by an amount exceeding a predefined limit, and
- determine that the brake is dragging based on the determination that said predefined limit has been exceeded. A technical benefit may include that this provides for a convenient manner to detect brake dragging, and may be performed through continuous registration of the temperature delta between the measured temperature and the estimated temperature.

Optionally in some examples, including in at least one preferred example, the processing circuitry may be configured to:
- determine that, for any point in time during said time period, a value of the second function is larger than the value of the first function by an amount exceeding a predefined limit, and
- determine that the brake, or an electronic brake system controlling the brake, is malfunctioning based on the determination that said predefined limit has been exceeded. A technical benefit may include that this provides for a convenient manner to determine that the brake is not dragging, and may be performed through continuous registration of the temperature delta between the measured temperature and the estimated temperature.

Optionally in some examples, including in at least one preferred example, said second input device may comprise a temperature estimator configured to estimate the brake temperature based on secondary information, such as based on applied brake pressure. A technical benefit may include that temperature estimators or estimator modules are readily available from different suppliers, and therefore present a convenient option for providing the second input data.

Optionally in some examples, including in at least one preferred example, said second input device may comprise a pressure sensor and said second input data represents brake pressure values measured by the pressure sensor, wherein the processing circuitry may further be configured to:
- determine that the brake pressure is 0 bar,
- register a sliding average of the acquired measured brake temperature values,
- determine that the sliding average exceeds a predefined threshold, and
- determine that the brake is dragging based on the determination that the predefined threshold has been exceeded. A technical benefit may include that when there is no temperature estimator available in the vehicle, there is a convenient option to instead make the determination based on brake pressure in combination with the measured temperature. When the temperature sensor detects climbing temperatures and the brake pressure recordings show 0 bar, the processing circuitry may compare the sliding average of the derivate of the temperature to a certain tolerance. If the derivate is high enough, the processing circuitry may suitably warn the driver of the fleet owner for potentially excessive wear in the brake pads. A brake pressure of 0 bar, i.e. when the brakes are not applied (i.e. no additional pressure has been applied in relation to the existing atmospheric pressure), is easily translatable by the processing circuitry into an estimated/expected temperature. In other words, the brake pads do not provide an additional component that affects the temperature of the brake disc/drum. Examples of components that affect the brake disc/drum are, for/ instance, the ambient temperature and the velocity of the vehicle (as it affects the airflow along the brake disc/drum). The sliding average of the acquired measured brake temperature values may suitably be taken over a sufficiently long time. A reason for having a long time window for the sliding average is that otherwise individual braking events may have a strong influence on the sliding average. An individual temperature affecting brake event will have less influence on the sliding average the longer the time window for the sliding average. Thus, the risk of misinterpreting the result of the acquired sliding average may be reduced.

Optionally in some examples, including in at least one preferred example, said second input device may comprise a pressure sensor and said second input data represents brake pressure values measured by the pressure sensor, wherein the processing circuitry may be further configured to:
- determine that the brake pressure is at a level at which the brake should be in an engaged state,
- register a sliding average of the acquired measured brake temperature values,
- determine that the sliding average is below a temperature or temperature range that is expected for the brake in said engaged state, and
- determine that the brake, or an electronic brake system controlling the brake, is malfunctioning based on the determination that the sliding average is below the expected temperature or temperature range. A technical benefit may include when there is no temperature estimator available in the vehicle, there is a convenient option for the processing circuitry to instead determine whether or not the brake is dragging based on brake pressure in combination with the measured temperature. Brake pressure provides a parameter value which can easily be translated into an estimated temperature-raising contribution (e.g. using known mathematical models which may also include parameters such as the duration of the applied pressure, material properties such as heat conductivity, dissipation rate, etc.).

Optionally in some examples, including in at least one preferred example, said second input device may be configured to provide a measure or an estimate of a brake torque applied by the brake, wherein said second input data may comprise brake torque values translatable into estimated brake temperature values for the brake. A technical benefit may include that providing information about brake torque allows for versatile implementations as there are various ways for enabling brake torque to be applied. For instance, in some examples, a brake torque may be applied by pneumatically or hydraulically controllable brake calipers. In other examples, brake calipers may be electrically or electromagnetically controllable, for example by means of an electric motor which may be controlled to provide a force to actuate the brake caliper. By having a measured or estimated value of the brake torque, the value can be conveniently translated into estimated brake temperature values, for example by taking into account the rotational velocity of the wheel which is subjected to the brake torque and the time during which the brake torque is applied. For example, the brake power can be calculated as the product of the brake torque and rotational velocity of the wheel. In its turn, the brake power together with the time duration of the braking can be inserted in a thermal model for estimating a brake temperature value. Thus, the rotational velocity of the wheel and/or the time duration of the braking may, in at least some examples, also be regarded as being included in said second input data (similarly, any wheel speed sensor and/or timer may, in at least some examples, be regarded as being included in said second input device).

According to a second aspect of the disclosure, there is provided a vehicle comprising the computer system of the first aspect, including any example thereof, the vehicle further comprising:
- said first input device, providing said first input data to the processing circuitry,
- said second input device, providing said second input data to the processing circuitry, and
- said brake.
The second aspect of the disclosure may seek to address corresponding problems and may include corresponding technical benefits as the first aspect, including any example thereof.

According to a third aspect of the disclosure, there is provided a computer-implemented method, comprising:
- acquiring, by processing circuitry of a computer system, from a first input device comprising or being in the form of a temperature sensor, first input data representing brake temperature values that have been measured for a brake of a vehicle by the temperature sensor,
- acquiring, by the processing circuitry, from a different second input device, second input data representing parameter values in the form of or translatable into estimated brake temperature values for said brake,
- comparing, by the processing circuitry, said first input data and said second input data, and
- determining, by the processing circuitry, that the brake is dragging based on the comparison of said first input data and said second input data.
The third aspect of the disclosure may seek to address corresponding problems and may include corresponding technical benefits as the first aspect, including any example thereof.

In the following, some examples of the third aspect will be presented. Technical benefits of these examples may largely be analogous to the benefits discussed in relation to corresponding examples of the first aspect.

Optionally in some examples, including in at least one preferred example, the method may further comprise:
- comparing, by the processing circuitry, said first input data and said second input data by mapping, for multiple brake events, a temperature point for each brake event, each temperature point indicating a measured brake temperature value relative to an estimated brake temperature value, and
- identifying, by the processing circuitry, a cluster centroid of the mapped temperature points within a predefined area of the map.

Optionally in some examples, including in at least one preferred example, in said predefined area of the map, any temperature point may represent a measured brake temperature value being higher than an estimated brake temperature value, the method may further comprise:
- determining, by the processing circuitry, that the brake is dragging based on the identification of the cluster centroid being present within said predefined area of the map.

Optionally in some examples, including in at least one preferred example, in said predefined area of the map, any temperature point may represent a measured brake temperature value being lower than an estimated brake temperature value, the method may further comprise:
- determining, by the processing circuitry, that the brake, or an electronic brake system controlling the brake, is malfunctioning based on the identification of the cluster centroid being present within said predefined area of the map.

Optionally in some examples, including in at least one preferred example, the method may further comprise, over a time period, continuously acquiring, by the processing circuitry, said first input data and said second input data, irrespective of presence or absence of any brake events, wherein the method may further comprise comparing, by the processing circuitry, said first input data and said second input data by:
- mapping the measured brake temperature values as a first function of time,
- mapping the estimated brake temperature values as a second function of time, and
- continuously registering, during said time period, a difference between the values of the first function and the second function.

Optionally in some examples, including in at least one preferred example, the method may further comprise:
- determining, by the processing circuitry, that, for any point in time during said time period, a value of the first function is larger than the value of the second function by an amount exceeding a predefined limit, and
- determining, by the processing circuitry, that the brake is dragging based on the determination that said predefined limit has been exceeded.

Optionally in some examples, including in at least one preferred example, the method may further comprise:
- determining, by the processing circuitry, that, for any point in time during said time period, a value of the second function is larger than the value of the first function by an amount exceeding a predefined limit, and
- determining, by the processing circuitry, that the brake, or an electronic brake system controlling the brake, is malfunctioning based on the determination that said predefined limit has been exceeded.

Optionally in some examples, including in at least one preferred example, said second input device may comprise a temperature estimator configured to estimate the brake temperature based on secondary information, such as based on applied brake pressure.

Optionally in some examples, including in at least one preferred example, said second input device may comprise a pressure sensor and said second input data may represent brake pressure values measured by the pressure sensor, the method may further comprise:
- determining, by the processing circuitry, that the brake pressure is 0 bar,
- registering, by the processing circuitry, a sliding average of the acquired measured brake temperature values,
- determining, by the processing circuitry, that the sliding average exceeds a predefined threshold, and
- determining, by the processing circuitry, that the brake is dragging based on the determination that the predefined threshold has been exceeded.

Optionally in some examples, including in at least one preferred example, said second input device may comprise a pressure sensor and said second input data may represent brake pressure values measured by the pressure sensor, the method may further comprise:
- determining, by the processing circuitry, that the brake pressure is at a level at which the brake should be in an engaged state,
- registering, by the processing circuitry, a sliding average of the acquired measured brake temperature values,
- determining, by the processing circuitry, that the sliding average is below a temperature or temperature range that is expected for the brake in said engaged state, and
- determining, by the processing circuitry, that the brake, or an electronic brake system controlling the brake, is malfunctioning based on the determination that the sliding average is below the expected temperature or temperature range.

Optionally in some examples, including in at least one preferred example, said second input device may be configured to provide a measure or an estimate of a brake torque applied by the brake, wherein said second input data comprises brake torque values translatable into estimated brake temperature values for the brake.

According to a fourth aspect of the disclosure, there is provided a computer program product comprising program code for performing, when executed by the processing circuitry, the method of the third aspect including any example thereof. The fourth aspect of the disclosure may seek to address corresponding problems and may include corresponding technical benefits as the first and/or third aspect, including any example thereof.

According to a fifth aspect of the disclosure, there is provided a non-transitory computer-readable storage medium comprising instructions, which when executed by the processing circuitry, cause the processing circuitry to perform the method of the third aspect including any example thereof. The fifth aspect of the disclosure may seek to address corresponding problems and may include corresponding technical benefits as the first and/or third aspect, including any example thereof.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** schematically illustrates a vehicle according to one example of this disclosure.
**FIG. 2** schematically illustrates a computer system according to one example of this disclosure.
**FIGS. 3a-3c** are schematic graphs which are referred to in the below discussions related to an example of how to determine if a brake is dragging.
**FIG. 4** is another schematic graph which is referred to in the below discussions relation to another example of determining if a brake is dragging.
**FIG. 5** schematically illustrates a computer system according to another example of this disclosure.
**FIG. 6** schematically illustrates a computer-implemented method, in accordance with at least one example of this disclosure.
**FIG. 7****.** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

In vehicles, dragging brakes may cause brake discs or brake drums to become overheated. Also bearings may become overheated, and other undesirable thermal events may occur due to dragging brakes. Although the provision of a temperature sensor may enable detection of high temperatures, there is a problem that the temperature sensor cannot differentiate between if the temperature comes from purposeful braking or if it is a residual torque creating the heat in the brake disc or brake drum. Therefore, a temperature sensor does not necessarily provide a reliable indication as to whether or not a brake is dragging.

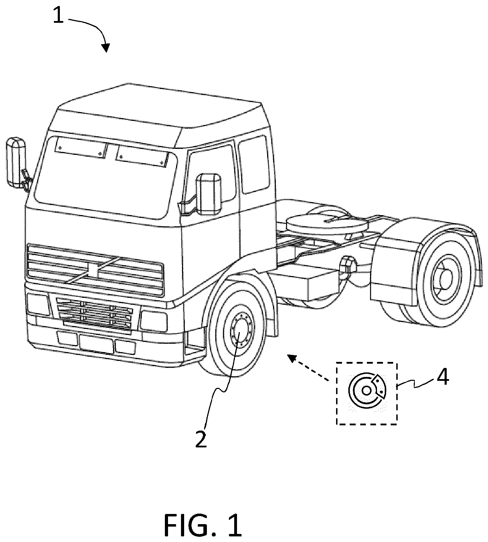

**FIG. 1** schematically illustrates a vehicle **1** according to one example of this disclosure. More specifically, the illustrated vehicle **1** is a heavy-duty vehicle in the form of a tractor unit, which may be configured to pull a trailer unit. Each one of the wheels **2** may be provided with brakes **4,** such as disc brakes or drum brakes. The vehicle **1** may include a computer system that may be used for determining whether or not any one of the brakes is dragging. It should be noted that the teachings of the present disclosure are not limited to a particular vehicle propulsion system, i.e., the teachings herein may be implemented for vehicles propelled by internal combustion engines, traction batteries, fuel cells, hybrid systems, etc. Thus, the computer system discussed in this disclosure may suitably be implemented in any one of the above-mentioned vehicles, including the illustrated vehicle **1.** Furthermore, the teachings herein may be implemented for driver operated vehicles or for self-driving autonomous vehicles.

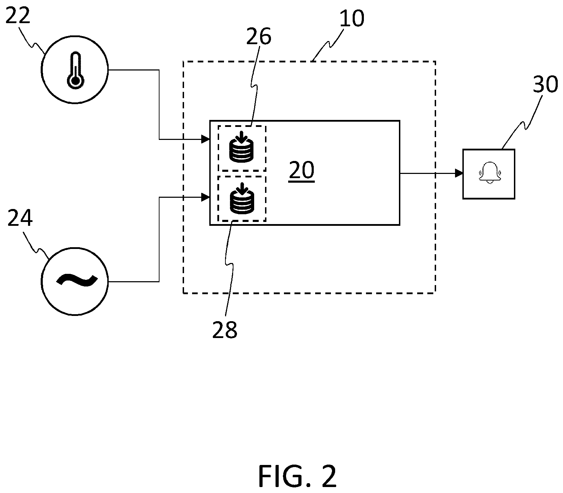

**FIG. 2** schematically illustrates a computer system **10** according to one example of this disclosure. The computer system comprises processing circuitry **20** which may be in operative communication with different input devices that may provide informational input to the processing circuitry **20.** In this example two such input devices **22, 24** are shown, however, in other examples there may be more such devices. In this example, there is illustrated a first input device **22.** The first input device **22** comprises, or is in the form of, a temperature sensor. The processing circuitry **20** is configured to acquire, from the first input device **22,** first input data **26** representing brake temperature values that have been measured for a brake of a vehicle by the temperature sensor. In this example, there is also illustrated a second input device **24,** which is different from the first input device **22.** The second input device **24** is configured to provide second input data **28** representing parameter values in the form of or translatable into estimated brake temperature values. Thus, the processing circuitry **20** is configured to acquire such second input data **28** from the second input device **24.** As has already been discussed previously in this disclosure, said parameter values may, for example, be in the form of brake pressure values, brake force values, wheel speed values, brake torque values, etc. A value of a brake pressure applied to a certain brake can for example be translated through appropriate models and/or formulas into estimated brake temperature values for the brake. Similarly other parameter values may readily be translated into estimated temperature values of the brake. Therefore, the second input device **24** may, in some examples, include or may be operatively connected to a pressure sensor which measures the applied brake pressure. In other examples, the second input device **24** may be configured to provide a measure or an estimate of a brake torque applied by the brake, wherein said second input data **28** may comprise brake torque values translatable into estimated brake temperature values for the brake.

As has also already been discussed previously in this disclosure, said parameter values may, for example, be estimated brake temperature values obtained by means of a brake temperature estimator. Such a brake temperature estimator may be configured to estimate the brake temperature based on secondary information, including for example an applied brake pressure. Thus, the processing circuitry **20** may in some examples be configured to receive parameter values which the processing circuitry **20** itself translates into estimated brake temperature values. In other examples, the processing circuitry **20** may be configured to receive, for example from a brake temperature estimator, already estimated brake temperature values.

The processing circuitry **20** is configured to compare the first input data **26** and the second input data **28,** and to determine that the brake is dragging based on the comparison of the first input data **26** and the second input **28** data.

As illustrated in **FIG. 2****,** upon determination that the brake is dragging, the processing circuitry **20** may issue a warning **30.** The warning **30** may, for example, be provided to the driver, or in case of an autonomous vehicle, to fleet owner, or to some other interested party. The warning **30** may, for example be in the form of a warning message, or it may comprise a visual and/or audible alarm signal, etc.

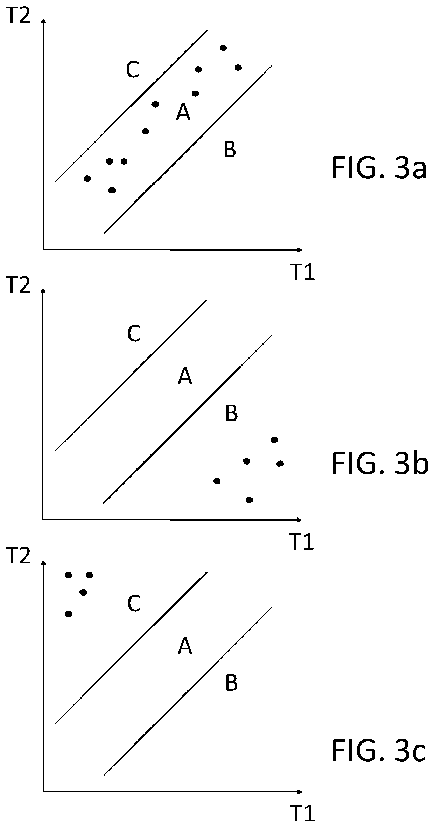

**FIGS. 3a-3c** are schematic graphs in which the horizontal axis is denoted **T1,** representing measured brake temperature values, and the vertical axis is denoted **T2,** representing estimated brake temperature values. The processing circuitry discussed in this disclosure may compare the first input data and the second input data by mapping, for multiple brake events, a temperature point for each brake event. In each one of **FIGS. 3a-3c** there are illustrated a plurality of temperature points that have been mapped. Each temperature point is thus represented by a measured brake temperature value (provided from the first input data and mapped along the **T1**-axis) and an estimated brake temperature value (provided from the second input data and mapped along the **T2**-axis). The processing circuitry may be configured to identify a cluster, in particular a cluster centroid, of the mapped temperature points within one or more predefined areas in the map.

**FIG. 3a** illustrates that all temperature points are provided within an area **A** of the map (which is here defined for illustrative purposes by two diagonal lines). Any temperature point that is located within this area **A** represents a measured brake temperature value which is the same or within an acceptable deviation from the estimated brake temperature value. In the illustrated example, when all mapped temperature points are provided in that area **A,** the processing circuitry can determine that the brakes are functioning normally, without any dragging. Thus, if the measured and estimated temperatures as provided by the first and second input data, respectively, are within a certain tolerance, the processing circuitry may conclude that the brakes are functioning normally. In other cases, when some of the temperature points might be outside of the area **A** between the two diagonal lines, then the processing circuitry may still determine that the brakes are functioning normally, if the cluster centroid of the mapped temperature points is within the predefined area **A** (i.e. in this illustration, between the two diagonal lines).

**FIG. 3b** illustrates that the temperature points are mapped such that the measured brake temperature values (i.e. in relation to the **T1**-axis) is considerably higher compared to the estimated brake temperature values (i.e. in relation to the **T2**-axis). This discrepancy may be indicative of a problem with residual brake torque. Thus, in **FIG. 3b****,** in the predefined area **B** located to the right and below both diagonal lines, any temperature point represents a measured brake temperature value being higher than an estimated brake temperature value. The processing circuitry may be further configured to determine that the brake is dragging based on the identification of the cluster centroid being present within this predefined area **B** of the map.

**FIG. 3c** illustrates that the temperature points are mapped such that the measured brake temperature values (i.e. in relation to the **T1**-axis) is considerably lower compared to the estimated brake temperature values (i.e. in relation to the **T2**-axis). This discrepancy may be indicative of brake pressure being applied without energy being transferred to the brakes. This in turn may be indicative of a problem with the brake or with an electronic brake system which controls the brakes. Thus, in **FIG. 3c****,** in the predefined area **C** located to the left and above both diagonal lines, any temperature point represents a measured brake temperature value being lower than an estimated brake temperature value. The processing circuitry may be further configured to determine that the brake, or an electronic brake system controlling the brake, is malfunctioning based on the identification of the cluster centroid being present within this predefined area **C** of the map.

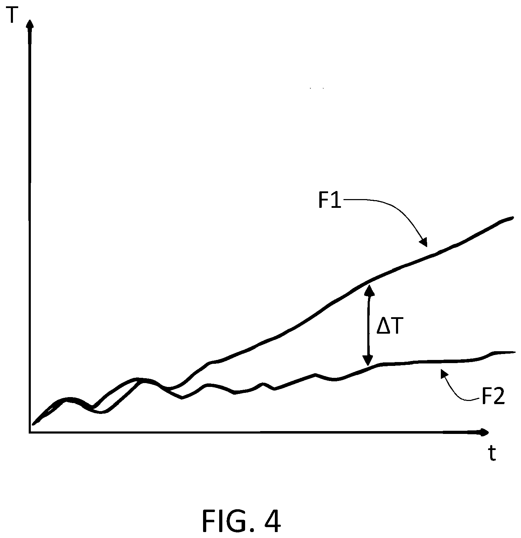

**FIG. 4** is another schematic graph in which the horizontal axis is denoted **t,** representing time (for example seconds), and the vertical axis is denoted **T,** representing temperature. Two curves **F1, F2** or functions have been drawn in the graph, one representing measured brake temperature values registered continuously over time, the other one representing estimated brake temperature values registered continuously over time. The graph is thus a very schematic illustration showing that the processing circuity may be configured to, over a time period, continuously acquire the first input data and the second input data, irrespective of presence or absence of any brake events. The processing circuitry may be further configured to compare the first input data and the second input data by mapping the measured brake temperature values as a first function of time, mapping the estimated brake temperature values as a second function time, and continuously registering, during said time period, a difference **ΔT** between the values of the first function and the second function.

For the following discussion, it will be assumed that in the illustration in **FIG. 4****,** the curve **F1** represents the first function and curve **F2** represents the second function. The processing circuity may be configured to determine that, for any point in time during said time period, a value of the first function is larger than the value of the second function by an amount exceeding a predefined limit. In other words, the difference **ΔT** is larger than a predefined limit. If said predefined limit has been exceeded, then the processing circuitry may determine that the brake is dragging.

Now it will instead be assumed that in the illustration in **FIG. 4****,** the curve **F1** represents the second function and curve **F2** represents the first function. The processing circuitry may be configured to determine that, for any point in time during said time period, a value of the second function is larger than the value of the first function by an amount exceeding a predefined limit. In other words, the difference **ΔT** is larger than a predefined limit. If this predefine limit is exceeded, then the processing circuitry may determine that a brake, or an electronic brake system controlling the brake is malfunctioning. It should be understood that the predefined limit discussed in this paragraph may, in absolute terms, be the same as or different from the predefined limit discussed in the previous paragraph.

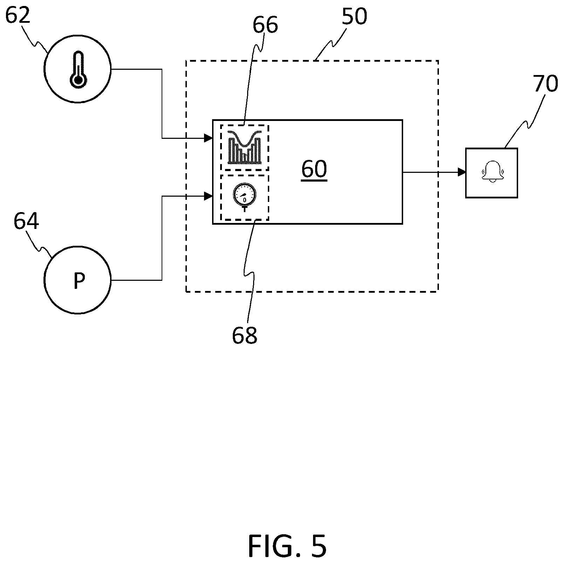

**FIG. 5** schematically illustrates a computer system **50** according to another example of this disclosure. Similarly to the example in **FIG. 2****,** in this example in **FIG. 5****,** processing circuitry **60** of the computer system **50** communicates with a first input device **62** and a second input device **64.** In this example, the second input device **64** comprises a pressure sensor and the second input data **68** represents brake pressure values measured by the pressure sensor. The processing circuity **60** may, based on the received second input data **68,** be further configured to determine that the brake pressure is 0 bar. The processing circuitry **60** may be further configured to register a sliding average of the acquired measured brake temperature values, based on first input data **66** received from the first input device **62.** When the processing circuitry **60** determines that the sliding average exceeds a predefined threshold, then the processing circuitry **60** may, based on that determination, further determine that the brake is dragging. Similarly to what has been discussed previously, a warning **70** may suitably be issued by the processing circuitry.

On the other hand, if the processing circuitry **60** in the example in **FIG. 5** determines that, based on the second input data **68** received from the second input device **64,** the brake pressure is at a level at which the brake should be in an engaged state, and determines that the sliding average is below a temperature or temperature range that is expected for the brake in the engaged state, then the processing circuitry **60** may determine that the brake, or an electronic brake system controlling the brake, is malfunctioning. It should be understood that in this and any other examples in which the processing circuitry **60** determines that the brake, or an electronic brake system controlling the brake, is malfunctioning, the processing circuitry **60** may suitably be configured to issue a warning **70.**

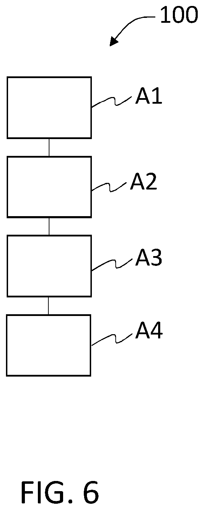

**FIG. 6** schematically illustrates a computer-implemented method **100,** in accordance with at least one example of this disclosure. The computer-implemented method 100 comprises the following actions **A1-A4:**
**A1**: acquiring, by processing circuitry of a computer system, from a first input device comprising or being in the form of a temperature sensor, first input data representing brake temperature values that have been measured for a brake of a vehicle by the temperature sensor,
**A2:** acquiring, by the processing circuitry, from a different second input device, second input data representing parameter values in the form of or translatable into estimated brake temperature values for said brake,
**A3:** comparing, by the processing circuitry, said first input data and said second input data, and
**A4:** determining, by the processing circuitry, that the brake is dragging based on the comparison of said first input data and said second input data.

It should be noted that the listed actions **A1-A4** do not necessarily need to be executed in the listed order. For instance, actions **A1** and **A2** may suitably be performed simultaneously.

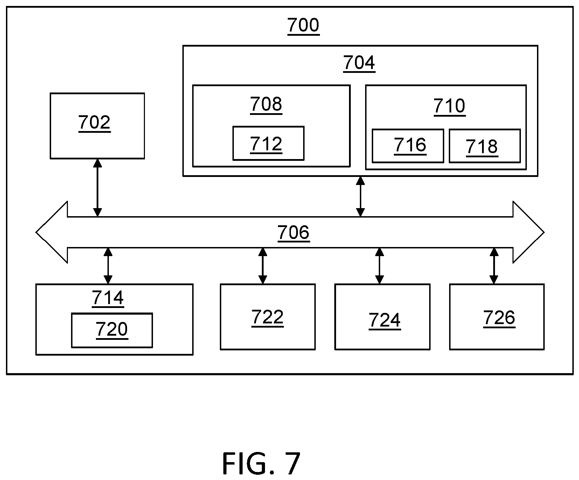

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The processing circuitry **702** may, for example correspond to the processing circuitry **20** in **FIG. 2** or the processing circuitry **60** in **FIG. 5****.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (10, 50, 700) comprising processing circuitry (20, 60, 702) configured to:
- acquire, from a first input device (22, 62) comprising or being in the form of a temperature sensor, first input data (26, 66) representing brake temperature values that have been measured for a brake (4) of a vehicle (1) by the temperature sensor,
- acquire, from a different second input device (24, 64), second input data (28, 68) representing parameter values in the form of or translatable into estimated brake temperature values for said brake (4),
- compare said first input data (26, 66) and said second input data (28, 68), and
- determine that the brake (4) is dragging based on the comparison of said first input data (26, 66) and said second input data (28, 68).

2. The computer system (10, 50, 700) of claim 1, wherein the processing circuitry (20, 60, 702) is further configured to:
- compare said first input data (26, 66) and said second input data (28, 68) by mapping, for multiple brake events, a temperature point for each brake event, each temperature point indicating a measured brake temperature value relative to an estimated brake temperature value, and
- identify a cluster centroid of the mapped temperature points within a predefined area of the map.

3. The computer system (10, 50, 700) of claim 2, wherein, in said predefined area of the map, any temperature point represents a measured brake temperature value being higher than an estimated brake temperature value, wherein the processing circuitry (20, 60, 702) is further configured to:
- determine that the brake (4) is dragging based on the identification of the cluster centroid being present within said predefined area of the map.

4. The computer system (10, 50, 700) of claim 2, wherein in said predefined area of the map, any temperature point represents a measured brake temperature value being lower than an estimated brake temperature value, wherein the processing circuitry (20, 60, 702) is further configured to:
- determine that the brake (4), or an electronic brake system controlling the brake (4), is malfunctioning based on the identification of the cluster centroid being present within said predefined area of the map.

5. The computer system (10, 50, 700) of claim 1, wherein the processing circuitry (20, 60, 702) is further configured to, over a time period, continuously acquire said first input data (26, 66) and said second input data (28, 68), irrespective of presence or absence of any brake events, wherein the processing circuitry (20, 60, 702) is further configured to compare said first input data (26, 66) and said second input data (28, 68) by:
- mapping the measured brake temperature values as a first function (F1) of time,
- mapping the estimated brake temperature values as a second function (F2) of time, and
- continuously registering, during said time period, a difference (ΔT) between the values of the first function (F1) and the second function (F2).

6. The computer system (10, 50, 700) of claim 5, wherein the processing circuitry (20, 60, 702) is configured to:
- determine that, for any point in time during said time period, a value of the first function (F1) is larger than the value of the second function (F2) by an amount exceeding a predefined limit, and
- determine that the brake (4) is dragging based on the determination that said predefined limit has been exceeded.

7. The computer system (10, 50, 700) of claim 5, wherein the processing circuitry (20, 60, 702) is configured to:
- determine that, for any point in time during said time period, a value of the second function (F2) is larger than the value of the first function (F1) by an amount exceeding a predefined limit, and
- determine that the brake (4), or an electronic brake system controlling the brake (4), is malfunctioning based on the determination that said predefined limit has been exceeded.

8. The computer system (10, 50, 700) of any of claims 1-7, wherein said second input device (24) comprises a temperature estimator configured to estimate the brake temperature based on secondary information, such as based on applied brake pressure.

9. The computer system (10, 50, 700) of claim 1, wherein said second input device (64) comprises a pressure sensor and said second input data (68) represents brake pressure values measured by the pressure sensor, wherein the processing circuitry (20, 60, 702) is further configured to:
- determine that the brake pressure is 0 bar,
- register a sliding average of the acquired measured brake temperature values,
- determine that the sliding average exceeds a predefined threshold, and
- determine that the brake (4) is dragging based on the determination that the predefined threshold has been exceeded.

10. The computer system (10, 50, 700) of claim 1, wherein said second input device (64) comprises a pressure sensor and said second input data (68) represents brake pressure values measured by the pressure sensor, wherein the processing circuitry (20, 60, 702) is further configured to:
- determine that the brake pressure is at a level at which the brake (4) should be in an engaged state,
- register a sliding average of the acquired measured brake temperature values,
- determine that the sliding average is below a temperature or temperature range that is expected for the brake (4) in said engaged state, and
- determine that the brake (4), or an electronic brake system controlling the brake (4), is malfunctioning based on the determination that the sliding average is below the expected temperature or temperature range.

11. The computer system (10, 50, 700) of any of claims 1-10, wherein said second input device (24, 64) is configured to provide a measure or an estimate of a brake torque applied by the brake (4), wherein said second input data (28, 68) comprises brake torque values translatable into estimated brake temperature values for the brake (4).

12. A vehicle (1) comprising the computer system (10, 50, 700) of any of claims 1-11, the vehicle further comprising:
- said first input device (22, 62), providing said first input data (26, 66) to the processing circuitry (20, 60, 702),
- said second input device (24, 64), providing said second input data (28, 68) to the processing circuitry (20, 60, 702), and
- said brake (4).

13. A computer-implemented method (100), comprising:
- acquiring (A1), by processing circuitry (20, 60, 702) of a computer system (10, 50, 700), from a first input device (22, 62) comprising or being in the form of a temperature sensor, first input data (26, 66) representing brake temperature values that have been measured for a brake (4) of a vehicle (1) by the temperature sensor,
- acquiring (A2), by the processing circuitry (20, 60, 702), from a different second input device (24, 64), second input data (28, 68) representing parameter values in the form of or translatable into estimated brake temperature values for said brake (4),
- comparing (A3), by the processing circuitry (20, 60, 702), said first input data (26, 66) and said second input data (28, 68), and
- determining (A4), by the processing circuitry (20, 60, 702), that the brake (4) is dragging based on the comparison of said first input data (26, 66) and said second input data (28, 68).

14. A computer program product (714) comprising program code (720) for performing, when executed by the processing circuitry (20, 60, 702), the method (100) of claim 13.

15. A non-transitory computer-readable storage medium (714) comprising instructions, which when executed by the processing circuitry (20, 60, 702), cause the processing circuitry (20, 60, 702) to perform the method (100) of claim 13.

## Patentansprüche

1. Computersystem (10, 50, 700), das eine Verarbeitungsschaltung (20, 60, 702) umfasst, die dazu ausgelegt ist:
- Erfassen von ersten Eingabedaten (26, 66), die Bremstemperaturwerte repräsentieren, die für eine Bremse (4) eines Fahrzeugs (1) durch den Temperatursensor gemessen wurden, von einem ersten Eingabegerät (22, 62), das einen Temperatursensor umfasst oder in Form eines Temperatursensors vorliegt,
- Erfassen von zweiten Eingabedaten (28, 68), die Parameterwerte in Form von oder in geschätzte Bremstemperaturwerte umrechenbaren Werten für die Bremse (4) repräsentieren, von einem anderen zweiten Eingabegerät (24, 64),
- Vergleichen der ersten Eingabedaten (26, 66) und der zweiten Eingabedaten (28, 68), und
- Feststellen, dass die Bremse (4) schleift, basierend auf dem Vergleich der ersten Eingabedaten (26, 66) und der zweiten Eingabedaten (28, 68).

2. Computersystem (10, 50, 700) nach Anspruch 1, wobei die Verarbeitungsschaltung (20, 60, 702) ferner dazu ausgelegt ist:
- Vergleichen der ersten Eingabedaten (26, 66) und der zweiten Eingabedaten (28, 68), indem für mehrere Bremsereignisse ein Temperaturpunkt für jedes Bremsereignis aufgetragen wird, wobei jeder Temperaturpunkt einen gemessenen Bremstemperaturwert relativ zu einem geschätzten Bremstemperaturwert anzeigt, und
- Identifizieren eines Cluster-Schwerpunkts der aufgetragenen Temperaturpunkte innerhalb eines vordefinierten Bereichs der Karte.

3. Computersystem (10, 50, 700) nach Anspruch 2, wobei in dem vordefinierten Bereich der Karte jeder Temperaturpunkt einen gemessenen Bremstemperaturwert repräsentiert, der höher als ein geschätzter Bremstemperaturwert ist, wobei die Verarbeitungsschaltung (20, 60, 702) ferner dazu ausgelegt ist:
- Feststellen, dass die Bremse (4) schleift, basierend auf der Identifizierung des Cluster-Schwerpunkts, der innerhalb des vordefinierten Bereichs der Karte vorhanden ist.

4. Computersystem (10, 50, 700) nach Anspruch 2, wobei in dem vordefinierten Bereich der Karte jeder Temperaturpunkt einen gemessenen Bremstemperaturwert repräsentiert, der niedriger als ein geschätzter Bremstemperaturwert ist, wobei die Verarbeitungsschaltung (20, 60, 702) ferner dazu ausgelegt ist:
- Feststellen, dass die Bremse (4) oder ein elektronisches Bremssystem, das die Bremse (4) steuert, eine Fehlfunktion aufweist, basierend auf der Identifizierung des Cluster-Schwerpunkts, der innerhalb des vordefinierten Bereichs der Karte vorhanden ist.

5. Computersystem (10, 50, 700) nach Anspruch 1, wobei die Verarbeitungsschaltung (20, 60, 702) ferner dazu ausgelegt ist, über einen Zeitraum die ersten Eingabedaten (26, 66) und die zweiten Eingabedaten (28, 68) kontinuierlich zu erfassen, unabhängig vom Vorhandensein oder Fehlen von Bremsereignissen, wobei die Verarbeitungsschaltung (20, 60, 702) ferner dazu ausgelegt ist, die ersten Eingabedaten (26, 66) und die zweiten Eingabedaten (28, 68) zu vergleichen, durch:
- Auftragen der gemessenen Bremstemperaturwerte als eine erste Funktion (F1) von Zeit,
- Auftragen der geschätzten Bremstemperaturwerte als eine zweite Funktion (F2) von Zeit, und
- kontinuierliches Registrieren einer Differenz (ΔT) zwischen den Werten der ersten Funktion (F1) und der zweiten Funktion (F2) während des Zeitraums.

6. Computersystem (10, 50, 700) nach Anspruch 5, wobei die Verarbeitungsschaltung (20, 60, 702) dazu ausgelegt ist:
- Feststellen, dass für einen beliebigen Zeitpunkt während des Zeitraums ein Wert der ersten Funktion (F1) den Wert der zweiten Funktion (F2) um einen Betrag übersteigt, der einen vordefinierten Grenzwert überschreitet, und
- Feststellen, dass die Bremse (4) schleift, basierend auf der Feststellung, dass der vordefinierte Grenzwert überschritten wurde.

7. Computersystem (10, 50, 700) nach Anspruch 5, wobei die Verarbeitungsschaltung (20, 60, 702) dazu ausgelegt ist:
- Feststellen, dass für einen beliebigen Zeitpunkt während des Zeitraums ein Wert der zweiten Funktion (F2) den Wert der ersten Funktion (F1) um einen Betrag übersteigt, der einen vordefinierten Grenzwert überschreitet, und
- Feststellen, dass die Bremse (4) oder ein elektronisches Bremssystem, das die Bremse (4) steuert, eine Fehlfunktion aufweist, basierend auf der Feststellung, dass der vordefinierte Grenzwert überschritten wurde.

8. Computersystem (10, 50, 700) nach einem der Ansprüche 1 bis 7, wobei das zweite Eingabegerät (24) einen Temperaturschätzer umfasst, der dazu ausgelegt ist, die Bremstemperatur auf der Grundlage von Sekundärinformationen zu schätzen, beispielsweise auf der Grundlage des aufgebrachten Bremsdrucks.

9. Computersystem (10, 50, 700) nach Anspruch 1, wobei das zweite Eingabegerät (64) einen Drucksensor umfasst und die zweiten Eingabedaten (68) Bremsdruckwerte repräsentieren, die durch den Drucksensor gemessen wurden, wobei die Verarbeitungsschaltung (20, 60, 702) ferner dazu ausgelegt ist:
- Feststellen, dass der Bremsdruck 0 bar beträgt,
- Registrieren eines gleitenden Durchschnitts der erfassten gemessenen Bremstemperaturwerte,
- Feststellen, dass der gleitende Durchschnitt einen vordefinierten Schwellenwert überschreitet, und
- Feststellen, dass die Bremse (4) schleift, basierend auf der Feststellung, dass der vordefinierte Schwellenwert überschritten wurde.

10. Computersystem (10, 50, 700) nach Anspruch 1, wobei das zweite Eingabegerät (64) einen Drucksensor umfasst und die zweiten Eingabedaten (68) Bremsdruckwerte repräsentieren, die durch den Drucksensor gemessen wurden, wobei die Verarbeitungsschaltung (20, 60, 702) ferner dazu ausgelegt ist:
- Feststellen, dass der Bremsdruck auf einem Niveau liegt, bei dem die Bremse (4) sich in einem betätigten Zustand befinden sollte,
- Registrieren eines gleitenden Durchschnitts der erfassten gemessenen Bremstemperaturwerte,
- Feststellen, dass der gleitende Durchschnitt unter einer Temperatur oder einem Temperaturbereich liegt, der für die Bremse (4) in dem betätigten Zustand erwartet wird, und
- Feststellen, dass die Bremse (4) oder ein elektronisches Bremssystem, das die Bremse (4) steuert, eine Fehlfunktion aufweist, basierend auf der Feststellung, dass der gleitende Durchschnitt unter der erwarteten Temperatur oder dem erwarteten Temperaturbereich liegt.

11. Computersystem (10, 50, 700) nach einem der Ansprüche 1 bis 10, wobei das zweite Eingabegerät (24, 64) dazu ausgelegt ist, ein Maß oder eine Schätzung eines durch die Bremse (4) aufgebrachten Bremsmoments bereitzustellen, wobei die zweiten Eingabedaten (28, 68) Bremsmomentswerte umfassen, die in geschätzte Bremstemperaturwerte für die Bremse (4) umrechenbar sind.

12. Fahrzeug (1), das das Computersystem (10, 50, 700) nach einem der Ansprüche 1 bis 11 umfasst, wobei das Fahrzeug ferner umfasst:
- das erste Eingabegerät (22, 62), das die ersten Eingabedaten (26, 66) an die Verarbeitungsschaltung (20, 60, 702) bereitstellt,
- das zweite Eingabegerät (24, 64), das die zweiten Eingabedaten (28, 68) an die Verarbeitungsschaltung (20, 60, 702) bereitstellt, und
- die Bremse (4).

13. Computerimplementiertes Verfahren (100), umfassend:
- Erfassen (A1) erster Eingabedaten (26, 66), die Bremstemperaturwerte repräsentieren, die für eine Bremse (4) eines Fahrzeugs (1) durch den Temperatursensor gemessen wurden, durch eine Verarbeitungsschaltung (20, 60, 702) eines Computersystems (10, 50, 700), von einem ersten Eingabegerät (22, 62), das einen Temperatursensor umfasst oder in Form eines Temperatursensors vorliegt,
- Erfassen (A2) von zweiten Eingabedaten (28, 68), die Parameterwerte in Form von oder in geschätzte Bremstemperaturwerte umrechenbaren Werten für die Bremse (4) repräsentieren, von einem anderen zweiten Eingabegerät (24, 64), durch die Verarbeitungsschaltung (20, 60, 702),
- Vergleichen (A3) der ersten Eingabedaten (26, 66) und der zweiten Eingabedaten (28, 68) durch die Verarbeitungsschaltung (20, 60, 702), und
- Feststellen (A4) durch die Verarbeitungsschaltung (20, 60, 702), dass die Bremse (4) schleift, basierend auf dem Vergleich der ersten Eingabedaten (26, 66) und der zweiten Eingabedaten (28, 68).

14. Computerprogrammprodukt (714), das Programmcode (720) zur Ausführung des Verfahrens (100) nach Anspruch 13 umfasst, wenn es durch die Verarbeitungsschaltung (20, 60, 702) ausgeführt wird.

15. Nichtflüchtiges computerlesbares Speichermedium (714), das Anweisungen umfasst, die, wenn sie durch die Verarbeitungsschaltung (20, 60, 702) ausgeführt werden, die Verarbeitungsschaltung (20, 60, 702) veranlassen, das Verfahren (100) nach Anspruch 13 durchzuführen.

## Revendications

1. Système informatique (10, 50, 700) comprenant des circuits de traitement (20, 60, 702) configurés pour :
- acquérir, à partir d'un premier dispositif d'entrée (22, 62) comprenant ou se présentant sous la forme d'un capteur de température, des premières données d'entrée (26, 66) représentant des valeurs de température de frein qui ont été mesurées pour un frein (4) d'un véhicule (1) par le capteur de température,
- acquérir, à partir d'un second dispositif d'entrée (24, 64) différent, des secondes données d'entrée (28, 68) représentant des valeurs de paramètre sous la forme de ou convertissables en valeurs de température de frein estimées pour ledit frein (4),
- comparer lesdites premières données d'entrée (26, 66) et lesdites secondes données d'entrée (28, 68), et
- déterminer que le frein (4) est traînant à partir de la comparaison desdites premières données d'entrée (26, 66) et desdites secondes données d'entrée (28, 68).

2. Système informatique (10, 50, 700) selon la revendication 1, dans lequel les circuits de traitement (20, 60, 702) sont en outre configurés pour :
- comparer lesdites premières données d'entrée (26, 66) et lesdites secondes données d'entrée (28, 68) en cartographiant, pour de multiples événements de freinage, un point de température pour chaque événement de freinage, chaque point de température indiquant une valeur de température de frein mesurée par rapport à une valeur de température de frein estimée, et
- identifier un centroïde de cluster des points de température cartographiés à l'intérieur d'une zone prédéfinie de la carte.

3. Système informatique (10, 50, 700) selon la revendication 2, dans lequel, dans ladite zone prédéfinie de la carte, tout point de température représente une valeur de température de frein mesurée qui est supérieure à une valeur de température de frein estimée, dans lequel les circuits de traitement (20, 60, 702) sont en outre configurés pour :
- déterminer que le frein (4) est traînant à partir de l'identification de la présence du centroïde de cluster à l'intérieur de ladite zone prédéfinie de la carte.

4. Système informatique (10, 50, 700) selon la revendication 2, dans lequel dans ladite zone prédéfinie de la carte, tout point de température représente une valeur de température de frein mesurée qui est inférieure à une valeur de température de frein estimée, dans lequel les circuits de traitement (20, 60, 702) sont en outre configurés pour :
- déterminer que le frein (4), ou qu'un système de freinage électronique commandant le frein (4), présente un dysfonctionnement à partir de l'identification de la présence du centroïde de cluster à l'intérieur de ladite zone prédéfinie de la carte.

5. Système informatique (10, 50, 700) selon la revendication 1, dans lequel les circuits de traitement (20, 60, 702) sont en outre configurés pour, sur une période de temps, acquérir en continu lesdites premières données d'entrée (26, 66) et lesdites secondes données d'entrée (28, 68), indépendamment de la présence ou de l'absence de tout événement de freinage, dans lequel les circuits de traitement (20, 60, 702) sont en outre configurés pour comparer lesdites premières données d'entrée (26, 66) et lesdites secondes données d'entrée (28, 68) par :
- la cartographie des valeurs de température de frein mesurées sous la forme d'une première fonction (F1) du temps,
- la cartographie des valeurs de température de frein estimées sous la forme d'une deuxième fonction (F2) du temps, et
- l'enregistrement en continu, pendant ladite période de temps, une différence (ΔT) entre les valeurs de la première fonction (F1) et de la deuxième fonction (F2).

6. Système informatique (10, 50, 700) selon la revendication 5, dans lequel les circuits de traitement (20, 60, 702) sont configurés pour :
- déterminer que, pour tout point dans le temps pendant ladite période de temps, une valeur de la première fonction (F1) est supérieure à la valeur de la deuxième fonction (F2) d'une quantité dépassant une limite prédéfinie, et
- déterminer que le frein (4) est traînant à partir de la détermination du fait que ladite limite prédéfinie a été dépassée.

7. Système informatique (10, 50, 700) selon la revendication 5, dans lequel les circuits de traitement (20, 60, 702) sont configurés pour :
- déterminer que, pour tout point dans le temps pendant ladite période de temps, une valeur de la deuxième fonction (F2) est supérieure à la valeur de la première fonction (F1) d'une quantité dépassant une limite prédéfinie, et
- déterminer que le frein (4), ou qu'un système de freinage électronique commandant le frein (4), présente un dysfonctionnement à partir de la détermination du fait que ladite limite prédéfinie a été dépassée.

8. Système informatique (10, 50, 700) selon l'une quelconque des revendications 1 à 7, dans lequel ledit second dispositif d'entrée (24) comprend un estimateur de température configuré pour estimer la température de frein à partir d'informations secondaires, tel qu'à partir d'une pression de frein appliquée.

9. Système informatique (10, 50, 700) selon la revendication 1, dans lequel ledit second dispositif d'entrée (64) comprend un capteur de pression et lesdites secondes données d'entrée (68) représentent des valeurs de pression de frein mesurées par le capteur de pression, dans lequel les circuits de traitement (20, 60, 702) sont en outre configurés pour :
- déterminer que la pression de frein est de 0 bar,
- enregistrer une moyenne glissante des valeurs de température de frein mesurées acquises,
- déterminer que la moyenne glissante dépasse un seuil prédéfini, et
- déterminer que le frein (4) est traînant à partir de la détermination du fait que le seuil prédéfini a été dépassé.

10. Système informatique (10, 50, 700) selon la revendication 1, dans lequel ledit second dispositif d'entrée (64) comprend un capteur de pression et lesdites secondes données d'entrée (68) représentent des valeurs de pression de frein mesurées par le capteur de pression, dans lequel les circuits de traitement (20, 60, 702) sont en outre configurés pour :
- déterminer que la pression de frein est à un niveau auquel le frein (4) devrait être dans un état serré,
- enregistrer une moyenne glissante des valeurs de température de frein mesurées acquises,
- déterminer que la moyenne glissante est inférieure à une température ou plage de températures qui est attendue pour le frein (4) dans ledit état serré, et
- déterminer que le frein (4), ou qu'un système de freinage électronique commandant le frein (4), présente un dysfonctionnement à partir de la détermination du fait que la moyenne glissante est inférieure à la température ou plage de températures attendue.

11. Système informatique (10, 50, 700) selon l'une quelconque des revendications 1 à 10, dans lequel ledit second dispositif d'entrée (24, 64) est configuré pour fournir une mesure ou une estimation d'un couple de freinage appliqué par le frein (4), dans lequel lesdites secondes données d'entrée (28, 68) comprennent des valeurs de couple de freinage convertissables en valeurs de température de frein estimées pour le frein (4).

12. Véhicule (1) comprenant le système informatique (10, 50, 700) selon l'une quelconque des revendications 1 à 11, le véhicule comprenant en outre :
- ledit premier dispositif d'entrée (22, 62), fournissant lesdites premières données d'entrée (26, 66) aux circuits de traitement (20, 60, 702),
- ledit second dispositif d'entrée (24, 64), fournissant lesdites secondes données d'entrée (28, 68) aux circuits de traitement (20, 60, 702), et
- ledit frein (4).

13. Procédé mis en œuvre par ordinateur (100), comprenant :
- l'acquisition (A1), par des circuits de traitement (20, 60, 702) d'un système informatique (10, 50, 700), à partir d'un premier dispositif d'entrée (22, 62) comprenant ou se présentant sous la forme d'un capteur de température, de premières données d'entrée (26, 66) représentant des valeurs de température de frein qui ont été mesurées pour un frein (4) d'un véhicule (1) par le capteur de température,
- l'acquisition (A2), par les circuits de traitement (20, 60, 702), à partir d'un second dispositif d'entrée (24, 64) différent, de secondes données d'entrée (28, 68) représentant des valeurs de paramètre sous la forme de ou convertissables en valeurs de température de frein estimées pour ledit frein (4),
- la comparaison (A3), par les circuits de traitement (20, 60, 702), desdites premières données d'entrée (26, 66) et desdites secondes données d'entrée (28, 68), et
- la détermination (A4), par les circuits de traitement (20, 60, 702), que le frein (4) est traînant à partir de la comparaison desdites premières données d'entrée (26, 66) et desdites secondes données d'entrée (28, 68).

14. Produit-programme d'ordinateur (714) comprenant du code de programme (720) pour réaliser, lorsqu'il est exécuté par les circuits de traitement (20, 60, 702), le procédé (100) selon la revendication 13.

15. Support de stockage lisible par ordinateur non transitoire (714) comprenant des instructions qui, lorsqu'elles sont exécutées par les circuits de traitement (20, 60, 702), amènent les circuits de traitement (20, 60, 702) à réaliser le procédé (100) selon la revendication 13.
